# EUROPÄISCHE PATENTSCHRIFT

(11) **EP 3 461 712 B1**
(45) Veröffentlichungstag und Bekanntmachung des Hinweises auf die Patenterteilung: **08.07.2020**
(21) Anmeldenummer: 18193589.1
(22) Anmeldetag: 11.09.2018
(51) Int. Cl.: B61D 23/00, B60R 3/00, E06C 1/36, E06C 5/24

(54) **TRITTPLATTENEINHEIT FÜR FAHRZEUGE**
STEP PLATE UNIT FOR VEHICLES
MARCHEPIED POUR VÉHICULES

(30) Priorität: 27.09.2017 AT 508312017
(43) Veröffentlichungstag der Anmeldung: 03.04.2019
(73) Patentinhaber: Oswald Kienbacher GmbH, 4540 Bad Hall (AT)
(72) Erfinder: KIENBACHER, Oswald, 4523 NEUZEUG (AT); SCHENNER, Andreas, 4421 ASCHACH A. D. STEYR (AT)
(74) Vertreter: Babeluk, Michael

(56) Entgegenhaltungen:
- EP-A1- 1 861 285
- DE-A1- 19 638 819
- DE-A1-102008 016 057
- DE-A1-102008 056 772
- US-A- 3 603 429

## Beschreibung

Die Erfindung betrifft eine Trittplatteneinheit für Fahrzeuge mit zumindest einer Auftrittplatte und zumindest zwei Seitenplatten, wobei die Seitenplatten elastische Abschnitte aus einem Elastomer wie beispielsweise einem biegsamen Kunststoff oder Gummi aufweisen und zumindest ein elastischer Abschnitt zumindest ein Verstärkungselement aufweist, welches zumindest teilweise von dem Elastomer ummantelt ist.

Die US 3,887,216 A beschreibt eine Trittplatteneinheit, welche im Wesentlichen eine Gummischleife und eine darin angeordnete feste Trittplatte aufweist. Sie wird über eine Halteplatte an einem Fahrzeug festgemacht. Während der Bewegung des Fahrzeugs kann die Trittplatteneinheit mitschwingen und bei Steinschlag oder Hindernissen, die die Einheit berühren, elastisch ausweichen. Dabei nimmt es nach Wegfall der Belastung wieder ihre ursprüngliche Form an. Bei längerer Verwendung kann der Gummi aber spröde werden bzw. kann er wegen der immer wiederkehrenden Belastungen an den Kanten der Metallelemente beschädigt werden und in weiterer Folge reißen. Durch die hohe Flexibilität der Einheit kann es außerdem während der Fahrt zu großen Bewegungen und Schwingungen kommen, wodurch Teile der Einheit an dem Fahrzeug aufschlagen können. Es kann auch zu einem Verdrehen des Gummis kommen, welches einerseits den Gummi zusätzlich unnötigerweise belastet, und er muss unter Umständen händisch wieder in Gebrauchsstellung gebracht werden, was nachteilig ist. Während eine möglichst große elastische Verformbarkeit in bestimmten Bereichen der Schleife gewünscht ist, beispielsweise in den von den Metallelementen beabstandeten Bereichen, ist in anderen Bereichen eine hohe Festigkeit gewünscht, beispielsweise im Bereich um die Metallelemente.

In der CN 204037452 U werden Trittplatteneinheiten offenbart, welche ein elastisches Segment aufweisen, die ebenso mitschwingen können. Jedoch ergibt sich hier ebenso die Problematik des starken Schwingens. Einerseits ist eine gewisse Elastizität notwendig, um die Funktion der elastischen Segmente zu gewährleisten, andererseits müssen die elastischen Segmente die Kraft bei Auftreten auf die Trittplatteneinheit gut übertragen und eine zu starke Bewegung oder ein Verdrehen der Einheit verhindern. Auch hier besteht das Problem, dass in bestimmten Bereichen der elastischen Abschnitte eine hohe Elastizität gefordert wird, während andere eine hohe Stabilität aufweisen müssen. Sonst kann es leicht zu einem Ausleiern oder gar Durchreißen der elastischen Segmente im Bereich der Anbringung an die Seitenplatten der Einheit kommen.

In der WO 2006/097585 A1, der DE 10 2008 016 057 A1 und der DE 10 2008 056 772 A1 sind Trittplatteneinheiten beschrieben, die Verstärkungselemente in den Seitenplatten aufweisen, welche an der oberen Seite eine Verbindung mit dem Fahrzeug aufbauen und an der unteren Seite mit der Auftrittplatte verbunden sind. Dadurch wird die mechanische Stabilität verbessert und ein Abreißen der Seitenplatten durch die Belastung während des Auftretens verhindert. Nachteilig ist dabei jedoch, dass diese Verstärkungselemente die Schwingfähigkeit der Seitenplatten vermindern. Wird die Trittplatte während der Fahrt von einem Stein oder Ähnlichem getroffen, so kann eine flexible Ausweichbewegung der Seitenplatten durch die Verstärkungselemente behindert werden. Dies kann zum Herabsetzen der Lebensdauer, Beschädigung oder Zerstörung der Trittplatteneinheit führen.

Aufgabe der Erfindung ist somit die beschriebenen Nachteile zu vermeiden und eine Trittplatteneinheit bereitzustellen, die eine erhöhte Lebensdauer aufweist.

Diese Aufgabe wird erfindungsgemäß dadurch erfüllt, dass die Abschnitte zumindest einen Schwingbereich aufweisen, der durch Verstärkungselemente nicht verstärkt wird und der sich über die gesamte Breite des Abschnittes erstreckt.

Durch diesen Schwingbereich können sich die Seitenplatten flexibel und elastisch verbiegen oder verdrehen, wenn die Trittplatteneinheit durch ein Hindernis oder Steinschlag getroffen wird. Insbesondere eine Schwingung in Längsachse des Fahrzeugs ist dabei bei geeigneter Ausführungsform möglich. Gleichzeitig bieten die Verstärkungselemente an den Stellen erhöhte Stabilität, die besonders starken Belastungen beim Auftreten einer Person auf die Trittplatteneinheit ausgesetzt sind. Dies führt zu einer möglichst hohen Beweglichkeit und gleichzeitig auch hohen Reißfestigkeit.

Durch die Anordnung von Verstärkungselementen kann gezielt die Bewegungsfreiheit der elastischen Abschnitte eingestellt werden. Dabei können nicht nur bestimmte Bereiche der elastischen Abschnitte verstärkt werden, es kann auch die Elastizität nur in bestimmte Richtungen verändert werden. Es kann die Belastbarkeit bestimmter Bereiche der elastischen Abschnitte erhöht werden. Insbesondere in Randbereichen der elastischen Abschnitte, die eine Verbindung zu benachbarten Elementen aufbauen, kann dies notwendig sein. Dort können die Verstärkungselemente eine bessere Kraftübertragung gewährleisten und ein Ausleiern der elastischen Elemente verhindern. Die Verstärkungselemente sollten aus einem Material gefertigt sein, welches in zumindest einer Richtung unflexibler ist als das Elastomer der elastischen Abschnitte. Dabei kommen Hartplastikteile, Metallprofile, aber auch Glas- oder Carbonfasern in Frage.

Die Trittplatte kann einstückig mit den Seitenplatten ausgeführt sein.

Vorteilhafterweise wird die Trittplatte in einem weniger elastischen Material, beispielsweise Hartplastik oder Stahl, ausgeführt als die elastischen Bereiche der Seitenplatten. Die Seitenplatten können auch vollständig oder fast vollständig aus den elastischen Bereichen gebildet werden.

Genannte Richtungs- und Positionsangaben wie oben oder unten beziehen sich auf Trittplatteneinheiten, welche sich in Gebrauchsstellung befinden, sprich, wenn sich zumindest eine Auftrittplatte in der Nähe des Untergrunds befindet, auf dem das Fahrzeug steht und eine Person zum Ein- oder Aussteigen auf diese treten kann.

Besonders vorteilhaft ist, wenn die Verstärkungselemente von den elastischen Abschnitten zumindest teilweise umspritzt sind. Dadurch können die Verstärkungselemente vor Korrosion geschützt werden, und es wird eine formschlüssige sowie stoffschlüssige Verbindung gebildet. Gleichzeitig ist das Spritzen der elastischen Bereiche ein schnelles und kostengünstiges Herstellungsverfahren, bei dem auf einfache Weise die Verstärkungselemente während der Herstellung der elastischen Bereiche mit diesem verbunden werden können.

Um die Stabilität der Vorrichtung weiter zu erhöhen, kann vorgesehen sein, dass die Seitenplatten über zumindest einen Verbindungsbalken verbunden sind. Diese Verbindungsbalken können einerseits die Bewegungsfreiheit stärker einschränken und andererseits als Verbindungsglied zwischen den elastischen Abschnitten und weiteren Teilen der Trittplatteneinheit dienen. Dies kann zu einer besseren Kraftverteilung beitragen. Dafür ist es besonders vorteilhaft, wenn zumindest zwei Verbindungsbalken vorgesehen sind, welche auf zwei gegenüberliegenden Seiten der Auftrittplatte angeordnet sind. Dadurch wird die Auftrittplatte eingebettet und eine gute Kraftverteilung ist möglich, da sie so ausgeführt werden kann, dass sie über weite Längen der Verbindungsbalken oder sogar deren gesamten Längen in Verbindung stehen. Es kann auch vorteilhaft sein, wenn die Verbindungsbalken mit den elastischen Abschnitten der Seitenplatten verbunden sind. Die Auftrittplatte kann direkt mit den elastischen Abschnitten verbunden sein. In einer bevorzugten Ausführungsform formen die Verbindungsbalken und die elastischen Abschnitte eine Öffnung und ist die Auftrittplatte darin eingesteckt. Dies ermöglicht eine gute, gegebenenfalls auch kraftübertragende Verbindung zwischen Auftrittplatte und den genannten angrenzenden Elementen der Trittplatteneinheit. Sie kann auch leicht ausgetauscht werden, falls sie verschmutzt oder defekt ist.

Es kann weiters vorgesehen sein, dass die Auftrittplatte über zumindest einen Verbindungsstift zumindest eines Verbindungsbalkens oder elastischen Abschnittes und ein auf den Verbindungsstift steckbares bzw. klebbares Verbindungsstück festlegbar ist. Durch Verwendung eines von der Auftrittplatte unabhängigen Verbindungsstücks kann der Auftrittplatte ein gewisser Bewegungsspielraum gewährt werden. Alternativ kann bei elastischer Ausführung eine Dämpfung der Bewegungen erreicht werden. Außerdem ist so die Montage bzw. Demontage schneller möglich. Es kann so außerdem auf Verschraubungen der Trittplatte mit den angrenzenden Teilen verzichtet werden.

Um die Stabilität und Langlebigkeit der Trittplatteneinheit zu erhöhen, können die elastischen Abschnitte zusammen mit den Verbindungsbalken einstückig ausgeführt sein. Dadurch werden kompakte Ausführungsformen geschaffen, bei denen ein Schritt im Zusammenbau ausgespart werden kann.

Damit die Verbindung zwischen elastischem Abschnitt und Verbindungsbalken versteift wird, kann zumindest ein erstes Verstärkungselement zumindest teilweise durch zumindest einen Verbindungsbalken geführt werden. Da die Verbindungsbalken in der Regel starken Kräften ausgesetzt sind, beispielsweise wenn sie mit der Auftrittplatte verbunden sind, gleichzeitig aber oft dünn ausgeführt werden, ist dies besonders vorteilhaft für deren Stabilität. Darüber hinaus kann der Übergangsbereich zwischen Verbindungsbalken und elastischem Abschnitt stabilisiert und entlastet werden.

Um eine besonders langlebige Ausführungsform zu erhalten, kann vorgesehen sein, dass das durch den Verbindungsbalken zumindest teilweise geführte erste Verstärkungselement durch den bzw. die Verbindungsbalken und den bzw. die elastischen Abschnitte vollständig ummantelt ist. Dadurch ist das Verstärkungselement nicht der Umwelt ausgesetzt und wird vor Korrosion und Beschädigung geschützt. Andererseits werden auch die angrenzenden Teile des Fahrzeuges und Personen, welche die Trittplatteneinheit benutzen, geschützt, falls das Verstärkungselement Kanten oder Spitzen aufweist.

Besonders vorteilhaft ist, wenn das erste Verstärkungselement durch die zwei gegenüberliegenden Verbindungsbalken sowie durch die mit ihnen verbundenen elastischen Abschnitte geführt ist. Dadurch wird eine kompakte Einheit gebildet, welche besonders stabil und gut geeignet für die Aufnahme einer Auftrittplatte ist. Die Kräfte, die über die Auftrittplatte auf die mit ihr verbundenen Elemente wirken, können über das Verstärkungselement abgeleitet und verteilt werden.

Wenn zumindest ein zweites Verstärkungselement eine Verbindung zwischen dem elastischen Abschnitt und einem weiteren Teil der Trittplatteneinheit oder an dem Fahrzeug aufbaut, so kann damit dieses Verstärkungselement auch zur besseren Verbindung mit dem elastischen Abschnitt dienen.

Weiters vorteilhaft ist, wenn an zumindest einem elastischen Abschnitt zumindest eine Verbindungsschraube zum Verbinden mit einem weiteren Teil der Trittplatteneinheit oder dem Fahrzeug vorgesehen ist. Dadurch kann eine sichere und feste Verbindung gewährleistet werden. Durch nur eine geeignete Schraubverbindung pro Seitenplatte kann auch eine Schwingung um die Schraubachse möglich gemacht werden.

Wenn eine Stabilisierung des elastischen Abschnittes im Bereich der Verbindungsschraube erwünscht ist, kann es vorteilhaft sein, wenn das zweite Verstärkungselement vom elastischen Abschnitt ummantelt an der Oberseite der Verbindungsschraube verläuft. Dadurch wird ein stark belasteter Bereich des elastischen Abschnitts verstärkt und es kann ein Ausreißen der Schraube verhindert werden.

Damit eine stabile aber leicht lösbare Verbindung über ein Verstärkungselement hergestellt werden kann, kann zumindest je ein zweites Verstärkungselement zur Verbindung zum weiteren Teil der Trittplatteneinheit oder zum Fahrzeug teilweise hakenförmig ausgeführt werden. Dadurch kann der elastische Abschnitt mit angrenzenden Teilen verhakt werden. Insbesondere in Kombination mit Schraubverbindungen kann dadurch eine stabile aber bewegliche Verbindung ermöglicht werden.

Wenn das zweite Verstärkungselement eine Verbindung zum weiteren Teil der Trittplatteneinheit oder zum Fahrzeug über eine Schnappverbindung aufbaut, so kann die Montage bzw. Demontage weiter vereinfacht und beschleunigt werden. Außerdem ist so eine stabile Festlegung möglich, welche einen gewissen Bewegungsspielraum zum Schwingen oder Vibrieren zulässt. Insbesondere eine Kombination einer Schnappverbindung mit Verschraubungen ist vorteilhaft, da so schnell eine sehr stabile Verbindung in wenigen Arbeitsschritten erreicht werden kann.

Damit ein Mitschwingen trotz Verstärkungselemente möglich ist, weisen die Abschnitte zumindest einen Schwingbereich auf, die durch Verstärkungselemente nicht verstärkt werden wird und der sich über die gesamte Breite des Abschnittes erstreckt. Da Trittplatteneinheiten dieser Art in der Regel so an Fahrzeugen angeordnet werden, dass die Längsachse der Auftrittplatte im Wesentlichen parallel zur Fahrzeug-Längsachse verläuft, kann so eine Schwingung in Längsrichtung des Fahrzeugs möglich sein.

Es kann weiters auch vorgesehen sein, dass zumindest ein Abschnitt zumindest einen Vertiefungsbereich aufweist, der eine reduzierte Dicke aufweist. In der Regel weist der Abschnitt eine über den Großteil seiner Fläche im Wesentlichen gleichbleibende Dicke auf, wobei in den Vertiefungsbereichen diese Dicke herabgesetzt ist. Mit anderen Worten ist die Dicke der Vertiefungsbereiche geringer als in den übrigen die Vertiefungsbereiche umgebenden Abschnitten. Diese verringerte Dicke ermöglicht eine höhere Flexibilität und ein besseres Schwingverhalten. Die herabgesetzte mechanische Belastbarkeit und das reduzierte Kraftaufnahmevermögen kann durch die dicker ausgeführten Bereiche um den Vertiefungsbereich kompensiert werden. Dadurch werden gute Belastbarkeit mit hoher Flexibilität kombiniert. Vorzugsweise ist der Vertiefungsbereich so angeordnet und geformt, dass an beiden Seiten des Vertiefungsbereichs ausreichend breite Bereiche angeordnet sind, die sich über die gesamte Länge des Abschnitts erstrecken. Damit wird die Übertragung der Gewichtskraft bei Auftreten auf die Trittplatteneinheit mehr über diese Bereiche von der Auftrittplatte in Richtung des Fahrzeugs gewährleistet.

In der Folge wird die vorliegende Erfindung anhand einer in den Figuren dargestellten Ausführungsvariante näher erläutert. Es zeigen:
- Fig. 1: eine Ausführungsform einer erfindungsgemäßen Trittplatteneinheit in einer schematischen Schrägansicht;
- Fig. 2: die gleiche Ausführungsform in einem Schnitt entlang der Linie A-A;
- Fig. 3: die gleiche Ausführungsform in einer Draufsicht;
- Fig. 4: eine zweite Ausführungsform in einer Seitenansicht;
- Fig. 5: einen Teil der zweiten Ausführungsform in einem Schnitt entlang der Linie B-B.

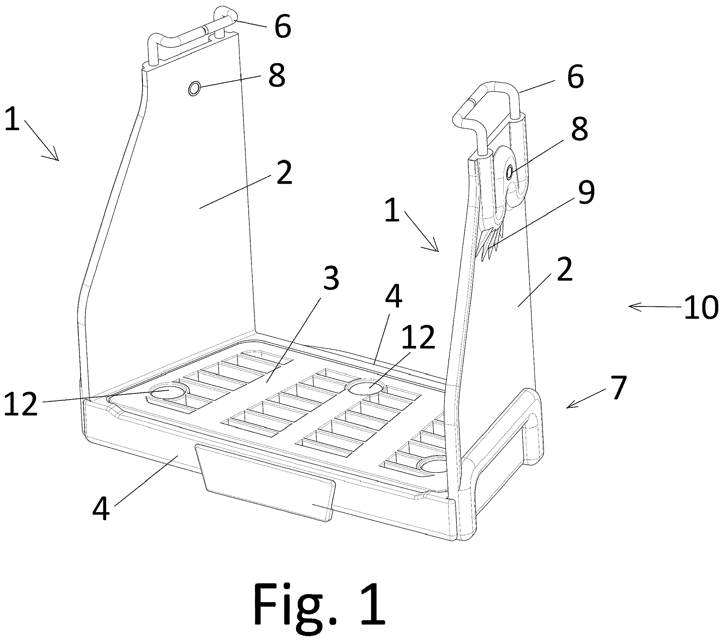

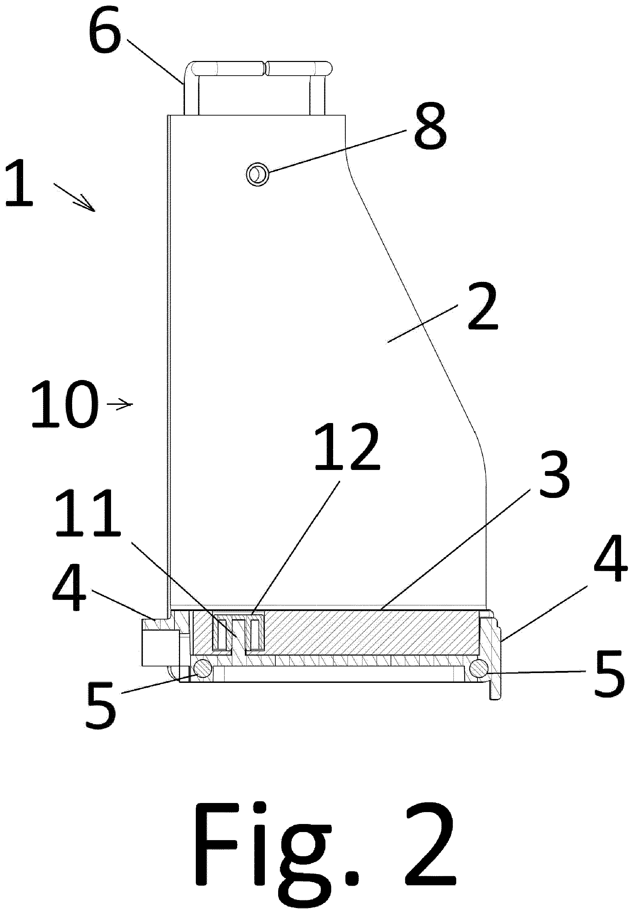

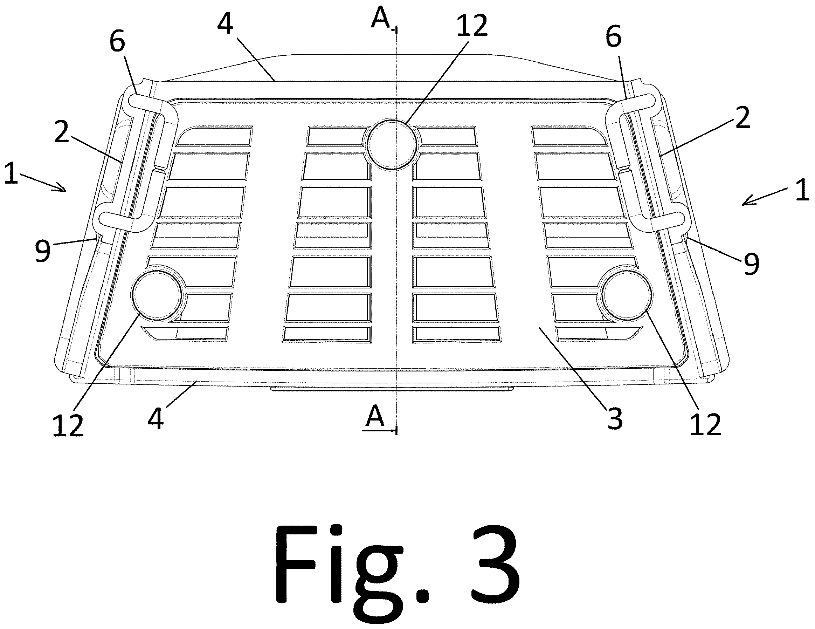

Die in den Figuren 1 bis 3 dargestellte erste Ausführungsvariante weist zwei Seitenplatten 1 auf, welche im Wesentlichen aus elastischen Abschnitten 2 bestehen, die durch ein Spitzgussverfahren hergestellt wurden. Sie sind einstückig zusammen mit zwei Verbindungsbalken 4 ausgeführt, welche eine Auftrittplatte 3 an ihrer Vorder- und Hinterseite begrenzen. Damit bilden die Verbindungsbalken 4 zusammen mit den unteren Bereichen der Seitenplatten 1 eine Öffnung, in die die Auftrittsplatte 3 eingesteckt ist. Ein Verbindungsbalken 4 und die elastischen Abschnitte 2 weisen je einen Verbindungsstift 11 auf, wobei diese durch eine dafür vorgesehene Öffnung der Auftrittplatte 3 hindurchragen. Oberhalb der Auftrittplatte 3 sind Verbindungsstücke 12 auf die Verbindungsstifte 11 aufgesetzt und aufgeklebt, wodurch die Auftrittplatte fest mit den elastischen Abschnitten 2 und dem Verbindungsbalken 4 verbunden wird. Zum Verkleben wird Klebstoff auf die Deckfläche sowie gegebenenfalls auch auf die Mantelfläche des Verbindungsstiftes 11 aufgebracht und/oder in das Verbindungsstück 12 eingeführt. Die Verbindungsstücke 12 sind ebenso aus elastischem Material, da sie sich so gut an die Auftrittplatte 3 anschmiegen und als Puffer wirken kann.

Die Seitenplatten 1 weisen ein vollständig eingegossenes, erstes Verstärkungselement 5 auf, welches als gebogene Stahlstange ausgeführt ist. Sie erstreckt sich vom unteren Bereich eines elastischen Abschnitts 2 durch die Verbindungsbalken 4 geradlinig bis in den anderen elastischen Abschnitt 2, und formt in den elastischen Abschnitten 2 nach oben gebogene Bügel 7. Dadurch wird die Gewichtskraft, welche auf die Auftrittsfläche 3 und damit auf die Verbindungsbalken 4 beim Auftreten wirkt, über das erste Verstärkungselement 5 gleichmäßig abgeleitet, und es kommt zu keiner Überbelastung der Teile der Verbindungsbalken 4, welche von den Seitenelementen 1 weiter entfernt sind.

Die Seitenplatten 1 stehen in einem Winkel von etwa 30° zueinander. Dies bedingt eine längere Vorderseite und eine kürzere Hinterseite der Auftrittplatte 3. Vorzugsweise wird die Trittplatteneinheit so am Fahrzeug angeordnet, dass die Vorderseite vom Fahrzeug weg zeigt, damit beim Einsteigen in das Fahrzeug besonders viel Platz für den Fuß bereitgestellt wird, was das Positionieren des Fußes erleichtert. An der Hinterseite kann die Trittplatteneinheit durch die reduzierte Länge leichter an dem Auto angeordnet und positioniert werden, da weniger Platz dafür erforderlich ist. Darüber hinaus ist an den oberen Rändern der elastischen Abschnitte 2 je ein zweites Verstärkungselement 6 angeordnet, welches teilweise eingegossen ist. Die nicht eingegossenen Teile weisen eine hakenförmige Form auf und dienen zum Anlegen an einer Verbindungsvorrichtung wie einer Kante oder eines Schnapphakens eines Fahrzeugs. Mittig sind Rillen vorgesehen, an denen eine passende Verbindungsvorrichtung des angelegten Fahrzeugteils einrasten kann. Diese Verbindungsvorrichtung weist vorzugsweise eine Unterkante und eine Oberkante auf, wobei die Unterkante unterhalb und die Oberkante oberhalb des nicht eingegossenen Teils angeordnet wird. Dabei liegt besonders vorzugsweise die Unterkante zumindest im Bereich nahe der Vorderseite und im Bereich nahe der Hinterseite am zweiten Verstärkungselement 6 an, während die Oberkante zumindest im Bereich nahe der Hinterseite am zweiten Verstärkungselement 6 anliegt. Dadurch wird das Kippen der Trittplatteneinheit bei Auftreten mit einem Fuß nahe der Vorderseite verhindert und damit das Aufsteigen erleichtert. Der eingegossene Teil weist eine W-förmige Kontur auf, wobei mittig und direkt unterhalb der zweiten Verstärkungselemente 6 in den elastischen Bereichen 2 Bohrungen 8 für eine Schraubverbindung vorgesehen sind. Diese geschwungene Führung der eingegossenen Teile der zweiten Verstärkungselemente 6 hat einerseits den Vorteil, dass die Länge der eingegossenen Teile erhöht und damit die Verbindung mit den elastischen Abschnitten 2 verbessert wird. Andererseits werden so die Bohrungen 8 nicht nur an der Oberseite, sondern auch an den Seiten gesichert und stabilisiert. Damit kann die Trittplatteneinheit in einem ersten Schritt schnell an dafür vorgesehene Schnappkanten eines Fahrzeuges festgelegt werden. Somit wird die Trittplatteneinheit direkt am dafür vorgesehenen Ort festgehalten. Zur Sicherung der Verbindung werden in einem zweiten Schritt die Verschraubungen durchgeführt.

Die elastischen Abschnitte 2 sind über weite Strecken mit gleichbleibender Dicke ausgeführt, lediglich im Bereich der vergossenen Verstärkungselemente 5, 6 sind sie verdickt, um diese zu umhüllen. Im Bereich einer Windung der zweiten Verstärkungselemente 6 sind Stabilisierungsstreben 9 angeordnet, um die Stelle zu entlasten. Zwischen dem ersten Verstärkungselement 5 und den zweiten Verstärkungselementen 6 sind Schwingbereiche 10 vorgesehen, welche nicht durch Verstärkungselemente verstärkt werden und deswegen gut schwingen bzw. sich deformieren können.

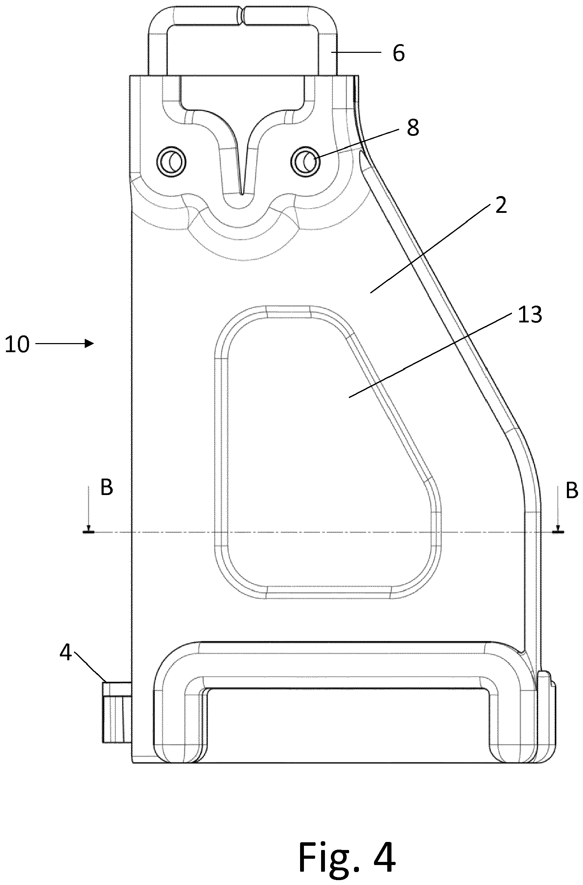

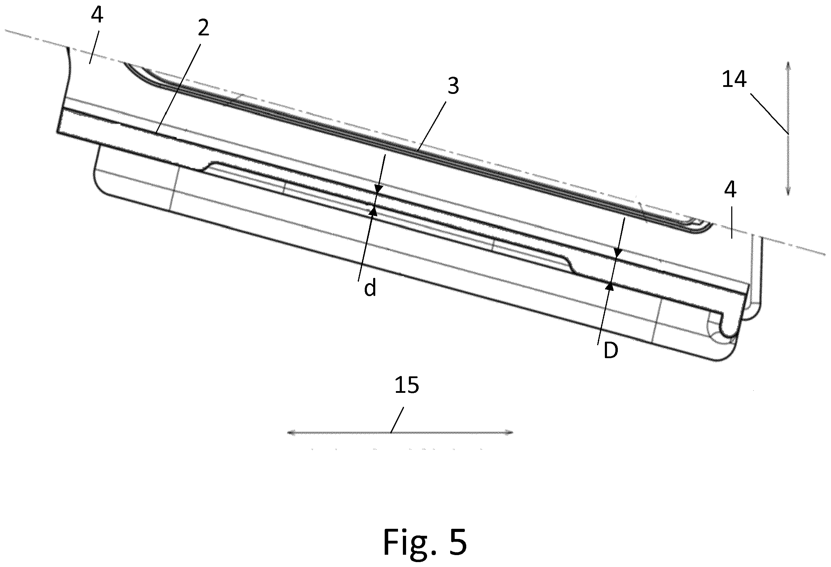

In Fig. 4 und Fig. 5 wird eine alternative Ausführungsvariante gezeigt, die im Wesentlichen wie die erste Ausführungsform aufgebaut ist. Die elastischen Abschnitte 2 weisen mit Ausnahme der verdickten Stellen im Bereich der Verstärkungselemente 5, 6 im Wesentlichen eine gleichbleibende erste Dicke D auf. Im Unterschied zur ersten Ausführungsform ist jedoch in den Schwingbereichen 10 je ein Vertiefungsbereich 13 angeordnet, die eine geringere zweite Dicke d aufweisen. In dieser Ausführungsform entspricht die erste Dicke D etwa der doppelten zweiten Dicke d. Diese Vertiefungsbereiche 13 sind mittig an den Abschnitten 2 angeordnet und deren Form ist an die trapezförmige Kontur der Abschnitte 2 angepasst. Jeder Vertiefungsbereich 13 weist zu den Kanten der Abschnitte 2 ausreichend Abstand auf, so dass sich breite Bereiche mit erster Dicke D über die gesamte Länge des Abschnitts 2 vom ersten bis zum zweiten Verstärkungselement 5, 6 erstrecken. Diese Wandstärkenabsenkung ermöglicht einerseits eine erhöhte Flexibilität in Fahrtrichtung 14, andererseits eine hohe Steifigkeit quer zur Fahrtrichtung (angezeigt durch Pfeil 15).

## Patentansprüche

1. Trittplatteneinheit für Fahrzeuge mit zumindest einer Auftrittplatte (3) und zumindest zwei Seitenplatten (1), wobei die Seitenplatten (1) elastische Abschnitte (2) aus einem Elastomer, wie beispielsweise einem biegsamen Kunststoff oder Gummi aufweisen, und zumindest ein elastischer Abschnitt zumindest ein Verstärkungselement (5, 6) aufweist, welches zumindest teilweise von dem Elastomer ummantelt ist, **dadurch gekennzeichnet, dass** die Abschnitte (2) zumindest einen Schwingbereich (10) aufweisen, der durch Verstärkungselemente nicht verstärkt wird und der sich über die gesamte Breite des Abschnittes (2) erstreckt.

2. Trittplatteneinheit nach Anspruch 1, **dadurch gekennzeichnet, dass** die Verstärkungselemente (5,6) von den elastischen Abschnitten (2) zumindest teilweise umspritzt sind.

3. Trittplatteneinheit nach Anspruch 1 oder 2, **dadurch gekennzeichnet, dass** die Seitenplatten (1) über zumindest einen Verbindungsbalken (4) verbunden sind.

4. Trittplatteneinheit nach Anspruch 3, **dadurch gekennzeichnet, dass** zumindest zwei Verbindungsbalken (4) vorgesehen sind, welche auf zwei gegenüberliegenden Seiten der Auftrittplatte (3) angeordnet sind.

5. Trittplatteneinheit nach Anspruch 4, **dadurch gekennzeichnet, dass** die Verbindungsbalken (4) und die elastischen Abschnitte (2) eine Öffnung formen und die Auftrittplatte (3) darin eingesteckt ist.

6. Trittplatteneinheit nach Anspruch 5, **dadurch gekennzeichnet, dass** die Auftrittplatte (3) über zumindest einen Verbindungsstift (11) zumindest eines Verbindungsbalkens (4) oder elastischen Abschnittes (2) und ein auf den Verbindungsstift (11) steckbares bzw. klebbares Verbindungsstück (12) festlegbar ist.

7. Trittplatteneinheit nach einem der Ansprüche 3 bis 6, **dadurch gekennzeichnet, dass** die elastischen Abschnitte (2) zusammen mit den Verbindungsbalken (4) einstückig ausgeführt sind.

8. Trittplatteneinheit nach einem der Ansprüche 3 bis 7, **dadurch gekennzeichnet, dass** zumindest ein erstes Verstärkungselement (5) zumindest teilweise durch zumindest einen Verbindungsbalken (4) geführt wird.

9. Trittplatteneinheit nach Anspruch 8, **dadurch gekennzeichnet, dass** das durch den Verbindungsbalken (4) zumindest teilweise geführte erste Verstärkungselement (5) durch den bzw. die Verbindungsbalken (4) und den bzw. die elastischen Abschnitte (2) vollständig ummantelt ist.

10. Trittplatteneinheit nach Anspruch 8 oder 9, **dadurch gekennzeichnet, dass** das erste Verstärkungselement (5) durch die zwei gegenüberliegenden Verbindungsbalken (4) sowie durch die mit ihnen verbundenen elastischen Abschnitte (2) geführt ist.

11. Trittplatteneinheit nach einem der Ansprüche 1 bis 10, **dadurch gekennzeichnet, dass** zumindest ein zweites Verstärkungselement (6) eine Verbindung zwischen dem elastischen Abschnitt und einem weiteren Teil der Trittplatteneinheit oder an dem Fahrzeug aufbaut.

12. Trittplatteneinheit nach einem der Ansprüche 1 bis 11, **dadurch gekennzeichnet, dass** an zumindest einem elastischen Abschnitt zumindest eine Verbindungsschraube zum Verbinden mit einem weiteren Teil der Trittplatteneinheit oder dem Fahrzeug vorgesehen ist.

13. Trittplatteneinheit nach Anspruch 11 oder nach Anspruch 12, sofern auf Anspruch 11 zurück bezogen, **dadurch gekennzeichnet, dass** das zweite Verstärkungselement (6) vom elastischen Abschnitt ummantelt an der Oberseite der Verbindungsschraube verläuft.

14. Trittplatteneinheit nach einem der Ansprüche 1 bis 13, **dadurch gekennzeichnet, dass** zumindest ein zweites Verstärkungselement (6) zur Verbindung zum weiteren Teil der Trittplatteneinheit oder zum Fahrzeug teilweise hakenförmig ausgeführt ist.

15. Trittplatteneinheit nach einem der Ansprüche 1 bis 14, **dadurch gekennzeichnet, dass** zumindest ein Abschnitt zumindest einen Vertiefungsbereich aufweist, der eine reduzierte Dicke aufweist.

## Claims

1. Step plate unit for vehicles, comprising at least one step plate (3) and at least two side plates (1), wherein the side plates (1) comprise elastic sections (2) made of an elastomer, such as a flexible plastic or rubber, and at least one elastic section comprising at least one reinforcing element (5, 6) which is at least partially sheathed by said elastomer, **characterised in that** the sections (2) comprise at least one vibrating area (10) which is not reinforced by reinforcing elements and which extends over the entire width of the section (2).

2. Step plate unit according to claim 1, **characterised in that** the reinforcing elements (5, 6) are at least partially extrusion-coated by the elastic sections (2).

3. Step plate unit according to claim 1 or 2, **characterised in that** the side plates (1) are connected via at least one connecting beam (4).

4. Step plate unit according to claim 3, **characterised in that** at least two connecting beams (4) are provided, which are arranged on two opposite sides of the step plate (3).

5. Step plate unit according to claim 4, **characterised in that** the connecting beams (4) and the elastic sections (2) form an opening and the step plate (3) is inserted therein.

6. Step plate unit according to claim 5, **characterised in that** the step plate (3) can be fixed via at least one connecting pin (11) of at least one connecting beam (4) or elastic section (2) and a connecting piece (12) which can be plugged or glued onto the connecting pin (11).

7. Step plate unit according to one of claims 3 to 6, **characterised in that** the elastic sections (2) are integrally formed together with the connecting beams (4).

8. Step plate unit according to one of claims 3 to 7, **characterised in that** at least one first reinforcing element (5) is at least partially guided through at least one connecting beam (4).

9. Step plate unit according to claim 8, **characterised in that** the first reinforcing element (5) which is at least partially guided through the connecting beam (4) is completely encased by the connecting beam(s) (4) and the elastic section(s) (2).

10. Step plate unit according to claim 8 or 9, **characterised in that** the first reinforcing element (5) is guided through the two opposite connecting beams (4) and through the elastic section(s) (2) connected thereto.

11. Step plate unit according to one of claims 1 to 10, **characterised in that** at least one second reinforcing element (6) establishes a connection between the elastic section and another part of the step plate unit or on the vehicle.

12. Step plate unit according to one of claims 1 to 11, **characterised in that** at least one connecting screw for connecting to a further part of the step plate unit or to the vehicle is provided on at least one elastic section.

13. Step plate unit according to claim 11 or according to claim 12, if referred back to claim 11, **characterised in that** the second reinforcing element (6), encased by the elastic section, extends on the upper side of the connecting screw.

14. Step plate unit according to one of claims 1 to 13, **characterised in that** at least one second reinforcing element (6) for connecting to the further part of the step plate unit or to the vehicle is formed in a partially hook-shaped manner.

15. Step plate unit according to one of claims 1 to 14, **characterised in that** at least one section has at least one recessed area which has a reduced thickness.

## Revendications

1. Marchepied pour véhicules comportant au moins un plateau (3) et au moins deux plaques latérales (1), les plaques latérales (1) ayant des segments élastiques (2) en un élastomère comme, par exemple, une matière plastique ou un caoutchouc souples et au moins un segment élastique comporte au moins un élément de renforcement (5, 6) au moins partiellement enveloppé par l'élastomère,
**caractérisé en ce que**
les segments (2) ont au moins une zone oscillante (10) renforcée par des éléments de renforcement et s'étendant sur toute la largeur du segment (2).

2. Marchepied selon la revendication 1,
**caractérisé en ce que**
les éléments pour renforcement (5, 6) sont au moins partiellement enrobés par injection par les segments élastiques (2).

3. Marchepied selon la revendication 1 ou 2,
**caractérisé en ce que**
les plaques latérales (1) sont reliées par au moins une poutre de liaison (4).

4. Marchepied selon la revendication 3,
**caractérisé en ce qu'**
il est prévu au moins deux poutres de liaison (4) sur les côtés opposés du plateau (3).

5. Marchepied selon la revendication 4,
**caractérisé en ce que**
les poutres de liaison (4) et les segments élastiques (2) forment une ouverture recevant le plateau (3).

6. Marchepied selon la revendication 5,
**caractérisé en ce que**
le plateau (3) est fixé par au moins une broche de liaison (11) d'au moins une poutre de liaison (4) ou segment élastique (2) et par un segment élastique (2) et une pièce de liaison (12) qui s'engage ou se colle sur la broche de liaison (11).

7. Marchepied selon l'une des revendications 3 à 6,
**caractérisé en ce que**
les segments élastiques (2) sont réalisés en une seule pièce avec les poutres de liaison (4).

8. Marchepied selon l'une des revendications 3 à 7,
**caractérisé par**
au moins un élément de renforcement (5) qui traverse au moins partiellement au moins une poutre de liaison (4).

9. Marchepied selon la revendication 8,
**caractérisé en ce que**
le premier élément de renforcement (5) qui traverse au moins partiellement la poutre de liaison (4) est enveloppé complètement par la ou les poutres de liaison (4) et par le ou les segments élastiques (2).

10. Marchepied selon la revendication 8 ou 9,
**caractérisé en ce que**
le premier élément de renforcement (5) traverse les deux poutres de liaison opposées (4) ainsi que les segments élastiques (2) reliés à celles-ci.

11. Marchepied selon l'une des revendications 1 à 10,
**caractérisé en ce qu'**
au moins un second élément de renforcement (6) réalise une liaison entre le segment élastique et une autre partie du plateau ou du véhicule.

12. Marchepied selon l'une des revendications 1 à 11,
**caractérisé en ce qu'**
au moins un segment élastique est muni d'au moins une vis de liaison pour être relié à une autre partie du marchepied ou du véhicule.

13. Marchepied selon la revendication 11 ou la revendication 12 reliée à la revendication 11
**caractérisé en ce que**
le second élément de renforcement (6) enveloppé par le segment élastique passe sur le côté supérieur de la vis de liaison.

14. Marchepied selon l'une des revendications 1 à 13,
**caractérisé en ce qu'**
au moins un second élément de renforcement (6) prévu pour la liaison avec l'autre partie du marchepied ou du véhicule est en partie en forme de crochet.

15. Marchepied selon l'une des revendications 1 à 14,
**caractérisé en ce qu'**
au moins un segment comporte au moins une zone en creux d'épaisseur réduite.
